# EUROPÄISCHE PATENTSCHRIFT

(11) **EP 3 023 810 B1**
(45) Veröffentlichungstag und Bekanntmachung des Hinweises auf die Patenterteilung: **13.11.2019**
(21) Anmeldenummer: 14003920.7
(22) Anmeldetag: 21.11.2014
(51) Int. Cl.: G01S 17/46, B29C 70/38, B25J 9/16, G01P 3/68, G01S 17/50, G01B 11/25, G01N 21/95

(54) **Ortungssystem und Verfahren**
Location system and method
Système de localisation et procédé

(43) Veröffentlichungstag der Anmeldung: 25.05.2016
(73) Patentinhaber: Airbus Defence and Space GmbH, 85521 Ottobrunn (DE)
(72) Erfinder: Engel, Franz, 81539 München (DE); Weimer, Christian, 85521 Ottobrunn (DE)
(74) Vertreter: Isarpatent

(56) Entgegenhaltungen:
- DE-A1-102010 044 175
- DE-A1-102012 111 898
- DE-A1-102013 104 546
- US-A1- 2007 271 064
- US-A1- 2007 280 501
- US-A1- 2008 259 325

## Beschreibung

Die Erfindung betrifft zunächst ein Ortungssystem zur Erfassung einer räumlichen Position eines Ablegekopfes einer Vorrichtung zum automatischen Ablegen von Verstärkungsfaserbändern in Relation zu einer Unterlage, auf der die Verstärkungsfaserbänder mittels des Ablegekopfes ablegbar sind.

Darüber hinaus hat die Erfindung ein Verfahren zur Erfassung einer räumlichen Position eines Ablegekopfes einer Vorrichtung zum automatischen Ablegen von Verstärkungsfaserbändern in Relation zu einer Unterlage, auf der die Verstärkungsfaserbänder mittels des Ablegekopfes abgelegt werden, zum Gegenstand.

Ferner betrifft die Erfindung ein Verfahren zur Detektion von Ablegefehlern einer Vorrichtung zum automatischen Ablegen von Verstärkungsfaserbändern auf einer Unterlage mittels eines Ablegekopfes.

Zur Herstellung leichtgewichtiger Bauteile mit einer zugleich hohen mechanischen Belastbarkeit werden heutzutage in der Regel kohlenstofffaserverstärkte Kunststoffe, wie zum Beispiel CFK verwendet. Zur rationellen Fertigung von Bauteilen aus CFK mit komplexen Geometrien kommt in diesem Zusammenhang unter anderem das s. g. AFP-Verfahren ("automated fibre placement") zum Einsatz. Hierbei werden schmale Bänder aus Kohlenstofffasern mittels eines Ablegekopfes sukzessiv nebeneinander und übereinander auf einer Unterlage abgelegt und auf geeignete Weise fixiert. Der Ablegekopf lässt sich hierzu beispielsweise mittels einer Handhabungsvorrichtung, insbesondere einem Roboter, vollautomatisch entlang von vorprogrammierten Bahnen im Raum mit mehreren Freiheitsgraden bewegen. Nach dem Ende des im Allgemeinen vollautomatischen Ablegeprozesses wird der so erzeugte Verstärkungsfaseraufbau bevorzugt mit einem aushärtbaren Kunststoff infiltriert und ausgehärtet. Alternativ können auch mit einem aushärtbaren Kunststoff vorimprägnierte Bänder aus Kohlenstofffasern (s. g. "Prepregs") vollautomatisch mittels des Ablegekopfes auf einer Unterlage abgelegt werden, so dass die Lagefixierung der trockenen Kohlenstofffaserbänder und deren nachträgliche Infiltration mit dem aushärtbaren Kunststoff entfallen kann.

Zur Qualitätssicherung wird ein am Ablegekopf angeordneter Detektor eingesetzt, der parallel zum Ablegeprozess die relative Position der Kohlenstofffaserbänder zueinander erfasst und verschiedene Ablegefehler sucht bzw. die Einhaltung vorgegebener Anforderungen überprüft. Derartige Ablegefehler können z. B. zu große Abstände zwischen den Kohlenstofffaserbändern oder auch Verdrehungen der Kohlenstofffaserbänder sein. Bei den vom Detektor gemessenen Daten handelt es sich um Höhenprofile. Bestimmte Fehlertypen können jedoch nicht allein anhand von Höhenprofilen erkannt werden. Dies betrifft z. B. Abweichungen von einer vorgegebenen Soll-Bauteilgeometrie. Aus diesem Grund muss die Position bzw. die räumliche Lage der gemessenen Höhenprofile bestimmt werden und ggfls. in der Auswertung durch Zusammensetzen berücksichtigt werden.

Die räumliche Position des Ablegekopfes kann über externe Systeme bestimmt werden. So kann z. B. ein zur Bewegung des Ablegekopfes eingesetzter Roboter die Positionskoordinaten des Ablegekopfes ausgeben. Über geeignete Koordinatentransformationen und Vermessungen kann dann die exakte Position des Lasersensors und damit die der Laserprofile ermittelt werden. Alternativ kann zur Positionsbestimmung des Lasersensors auch ein Lasertracker eingesetzt werden.

Eine Positionsbestimmung anhand von Daten externer Systeme, wie zum Beispiel des zur Bewegung des Ablegekopfes eingesetzten Roboters, ist jedoch vielfach problembehaftet. So kann es notwendig sein, sich mit dem Hersteller abzustimmen, um eine kompatible Schnittstelle zu schaffen, was jedoch aus Gründen von Betriebsgeheimnissen vielfach unerwünscht ist oder an technischen Anforderungen, wie z. B. der zur Verfügung stehenden Auflösung und Genauigkeit, scheitert. Ein Einsatz von Lasertrackern ist hingegen in der Regel zu kostenaufwändig.

Aus dem Stand der Technik ist Dokument US 2007/0280501 A1 bekannt, welche ein System und Verfahren zum Inspizieren und Lokalisieren von Oberflächenmerkmalen von faserverstärkten Verbundstruktur-Werkstücken offenbart, wobei ein Ortungssystem eine räumliche Position eines Ablegekopfes einer Vorrichtung zum automatischen Ablegen von Verstärkungsfaserbändern in Relation zu einer Unterlage erfasst, auf der die Verstärkungsfaserbänder mittels des Ablegekopfes abgelegt werden. Zur Erfassung der Oberflächenmerkmale umfasst das System eine Laserquelle, die Laserstrahlen auf die abgelegten Verstärkungsfaserbänder projiziert, und eine Kamera, welche Bilder der mit den Laserstrahlen bestrahlten Oberfläche aufnimmt. Aus den aufgenommenen Bildern werden, zur Qualitätssicherung, mittels einer Auswerteeinheit Rückschlüsse auf die Topographie der Oberfläche gezogen.

Eine Aufgabe der Erfindung ist es daher zunächst, ein Ortungssystem anzugeben, das es gestattet, die räumliche Position eines Ablegekopfes einer Vorrichtung zum automatischen Ablegen von Verstärkungsfaserbändern unabhängig von anderen Systemen zu bestimmen. Darüber hinaus ist es eine Aufgabe der Erfindung, ein Verfahren zur Erfassung einer räumlichen Position eines Ablegekopfes sowie ein Verfahren zur Erkennung von Ablegefehlern, insbesondere mit Hilfe des erfindungsgemäßen Ortungssystems, anzugeben.

Diese Aufgabe wird zunächst dadurch gelöst, dass mittels mindestens einer Laserquelle wenigstens zwei im Wesentlichen in einem Abstand parallel voneinander und im Wesentlichen quer zu einer Ablegerichtung verlaufende Laserlinien auf die abgelegten Verstärkungsfaserbänder projizierbar sind, wobei die aufgrund einer unregelmäßigen Oberfläche der abgelegten Verstärkungsfaserbänder entstehenden Höhenprofile der projizierten Laserlinien mittels einer Kamera aufnehmbar und einer Auswerteeinheit zuführbar sind.

Hierdurch lässt sich die Position des Ablegekopfes zumindest im Fall von geradlinigen Verfahrbewegungen des Ablegekopfes mit hoher Genauigkeit und unabhängig von externen Systemen zur Fehlerreduzierung des Ablegeprozesses erfassen. Als Verstärkungsfaserbänder kommen bevorzugt Kohlenstofffaserbänder zum Einsatz.

Im Fall einer günstigen technischen Weiterbildung ist eine Laserquelle vorgesehen ist, deren Hauptstrahl mittels eines Strahlteilers zum Generieren von mindestens zwei separaten Laserstrahlen aufteilbar ist.

Hierdurch ist lediglich eine Laserquelle erforderlich, was zu einem reduzierten Aufwand führt. Alternativ können auch zwei oder mehr voneinander unabhängige Laserquellen bzw. Laser vorgesehen sein. Die so erzeugten mindestens zwei Laserstrahlen verlaufen in einem bekannten Abstand A parallel zueinander.

Bei einer weiteren vorteilhaften Ausgestaltung sind die Laserstrahlen zum Erzeugen der Laserlinien lateral trapezförmig aufgefächert.

Infolge der lateralen bzw. in einer quer zur Hauptstrahlrichtung erfolgenden Auffächerung ergeben sich auf den bereits abgelegten Verstärkungsfaserbändern bzw. der unbelegten Unterlage die beiden im Wesenltichen geradlinigen Laserlinien.

Nach Maßgabe einer günstigen Weiterentwicklung weist das Ortungssystem mindestens einen Sensor zur Erfassung einer Rotationsbewegung des Ablegekopfes um dessen Hochachse auf.

Hierdurch können Fehlmessungen vermieden werden, wenn sich der Ablegekopf abschnittsweise nicht geradlinig bewegt. Der mindestens eine Sensor kann z. B. ein Kreiselkompass, ein Magnetkompass oder ein Beschleunigungssensor sein.

Nach Maßgabe einer weiteren günstigen Ausgestaltung sind mittels des Ortungssystems zumindest im Wesentlichen geradlinige Verfahrbewegungen des Ablegekopfes in Relation zu der Unterlage erfassbar.

Infolgedessen lässt sich zumindest die Hauptbewegungsrichtung des Ablegekopfes einer AFP-Vorrichtung mit hoher Zuverlässigkeit und Genauigkeit erfassen.

Bei einer weiteren günstigen Fortbildung ist vorgesehen, dass das Ortungssystem auf einer Seite des Ablegekopfes, die der Ablegerichtung entgegengesetzt orientiert ist, angeordnet ist.

Hierdurch ist sichergestellt, dass das Ortungssystem stets über bereits auf der Unterlage und/oder anderen Verstärkungsfaserbändern abgelegten sowie hinreichend lagefixierten Verstärkungsfaserbändern geführt wird.

Darüber hinaus wird die eingangs genannte Aufgabe durch ein Verfahren nach Maßgabe des Patentanspruchs 7 gelöst.

Hierdurch lässt sich die jeweilige Position des Ablegekopfes in der Ablegerichtung zumindest im Fall geradliniger Verfahrbewegungen mit hoher Genauigkeit und unabhängig von externen Systemen, wie z. B. eines zur Bahnführung des Ablegekopfes eingesetzten Handhabungsgeräts (Industrieroboter) etc., bestimmen. Eine Zahl n der auftretenden Profilkongruenzen entspricht hierbei einem Verfahrweg, der exakt gleich dem n-fachen des Abstands zwischen den beiden Laserlinien ist. Ergibt sich nach Ablauf einer bestimmten Zeit keine Kongruenz zwischen den aufgenommenen Höhenprofilen, kann z. B. ein Fehlersignal generiert werden, was zu einer beträchtlichen Fehlerreduzierung im Ablegeprozess führt. Die Unterlage liegt z. B. in einer zumindest bereichsweise im Wesentlichen planen xy-Ebene eines Koordinatensystems der Vorrichtung, wobei eine z-Achse des Koordinatensystems parallel zu einer Hochachse des Ablegekopfes verläuft. Die Verfahrbewegungen des Ablegekopfes erfolgen hier exemplarisch im Wesentlichen parallel zur x-Achse und geradlinig. Als notwendiger Ausgangspunkt für die absolute Wegmessung mit Hilfe des Ortungssystems kann z. B. der Nullpunkt des Koordinatensystems gewählt werden.

Bei einer weiteren Ausgestaltung des Verfahrens werden die zu den Zeitpunkten t_{1,2} jeweils aufgenommenen zwei Höhenprofile kreuzweise miteinander verglichen.

Hierdurch lässt sich neben der Erfassung des linearen Verfahrweges des Ablegekopfes auch dessen Bewegungsrichtung in Relation zu der Unterlage bzw. den darauf abgelegten Verstärkungsfaserbändern bestimmen.

Im Fall einer günstigen Weiterbildung des Verfahrens erfolgen das Aufnehmen und das Vergleichen der Höhenprofile mit einer Abtastrate von mindestens 10 Hz.

Hierdurch ist eine in Relation zur Fortbewegungsgeschwindigkeit des Ablegekopfes messtechnisch hinreichend hohe und genaue Wegauflösung gegeben. Die aktuelle Geschwindigkeit des Ablegekopfes in Relation zur Unterlage lässt sich mittels des Verfahrens nicht direkt bestimmen. Als ein Anfangswert kann zum Beispiel diejenige Geschwindigkeit herangezogen werden, die der Ablegekopf bei der letzten durch einen Vergleich festgestellten Kongruenz von zwei Höhenprofilen aufwies. Änderungen dieses Anfangswertes können dann zum Beispiel durch die Messung der Beschleunigung des Ablegekopfes mittels geeigneter Sensoren und der numerischen Integration der von diesen gelieferten Beschleunigungswerte über die Zeit mit Hilfe der Auswerteeinheit ermittelt werden. Die hierzu notwendigen Beschleunigungsmesswerte können zum Beispiel von mindestens einem in das Ortungssystem integrierten Beschleunigungssensor aufgenommen werden.

Bei einer anderen Ausgestaltung des Verfahrens mit folgenden Schritten:
a) Projizieren einer Vielzahl von in einem Abstand voneinander parallel und im Wesentlichen quer zu einer Ablegerichtung verlaufenden Laserlinien mittels mindestens einer Laserquelle auf die abgelegten Verstärkungsfaserbänder,
b) Aufnehmen der aufgrund der unregelmäßigen Oberfläche der abgelegten Verstärkungsfaserbänder entstehenden Höhenprofile der projizierten Laserlinien mittels einer Kamera in einem Bild, und
c) Auswerten des Bildes mittels einer Auswerteeinheit zur Detektion von Ablegefehlern, lassen sich etwaig fehlerhaft auf der Unterlage abgelegte Verstärkungsfaserbänder bzw. unterschiedliche Typen von Ablegefehlern in einem Aufnahmebereich der Kamera mit nur einem von dieser aufgenommenen Bild zuverlässig detektieren. Die zeitgleiche Aufnahme einer Vielzahl von Laserlinien bzw. der sich daraus ergebenden Höhenprofile ermöglicht zum Beispiel eine eindeutige Unterscheidung zwischen einem verdrehten Verstärkungsfaserband und Überlappungsfehlern oder Lückenfehlern der Verstärkungsbändern, die mit nur einem Höhenprofil nicht unterscheidbar sind bzw. im Kamerabild gleich aussehen. Da ein Aufnahmebereich der Kamera üblicherweise nur einen kleinen Bereich der Oberfläche der auf der Unterlage abgelegten Verstärkungsfaserbänder erfasst, ist eine Wiederholung der Schritte a) bis c) - in Abstimmung mit der aktuellen Position des Ablegekopfes - im Allgemeinen unabdingbar, um die gesamte Oberfläche der auf der Unterlage abgelegten Verstärkungsfaserbänder im Idealfall vollständig und lückenlos abzutasten und auf Ablegefehler hin zu untersuchen. Ein Abstand zwischen den Laserlinien bzw. den sich ergebenden Höhenprofilen ist hierbei möglichst klein, um zur verlässlichen Fehlerdetektion ein möglichst realitätsnahes dreidimensionales Modell der Oberfläche der abgelegten Verstärkungsfaserbänder mittels der Auswerteeinheit berechnen zu können.

In der Zeichnung zeigt:
- **Fig. 1**: eine perspektivische Prinzipdarstellung einer Vorrichtung zum automatischen Ablegen von Verstärkungsfaserbändern auf einer Unterlage mit einem erfindungsgemäßen Ortungssystem, und
- **Fig. 2**: eine prinzipielle Darstellung des Ortungssystems von Fig. 1,
- **Fig. 3**: eine Draufsicht auf abgelegte Verstärkungsfaserbänder mit zwei darauf projizierten Laserlinien,
- **Fig. 4**: zwei zu einem Zeitpunkt t₁ aufgenommene Höhenprofile,
- **Fig. 5**: zwei zu einem Zeitpunkt t₂ aufgenommene Höhenprofile, und
- **Fig. 6**: eine Draufsicht auf abgelegte Verstärkungsfaserbänder mit zwei Paaren paralleler Höhenprofile bei einem von einem geradlinigen Verlauf abweichenden Verfahrweg des Ablegekopfes.

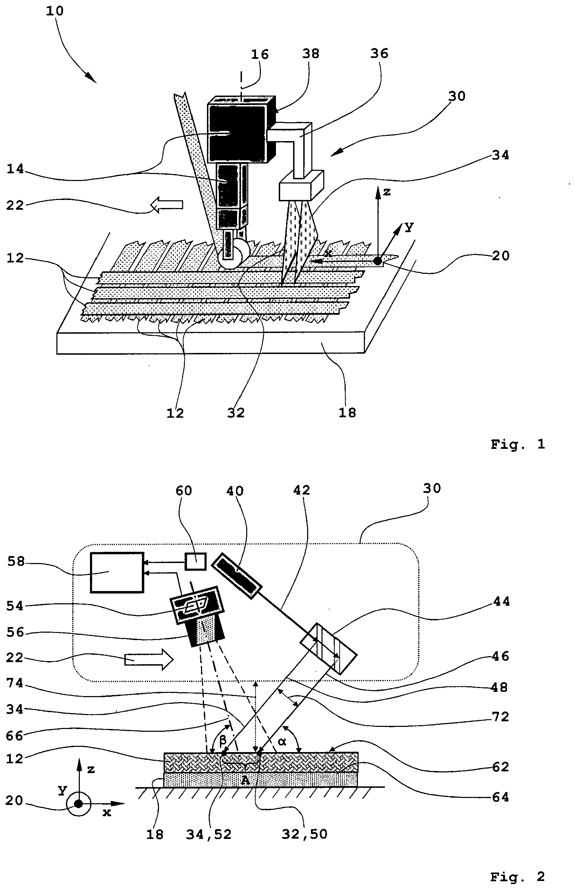

**Fig. 1** zeigt eine perspektivische Prinzipdarstellung einer Vorrichtung zum automatischen Ablegen von Verstärkungsfaserbändern auf einer Unterlage mit einem erfindungsgemäßen Ortungssystem.

Eine Vorrichtung 10 zum automatischen Ablegen von Verstärkungsfaserbänder 12 weist einen Ablegekopf 14 mit einer Hochachse 16 auf. Zur schichtweisen, sukzessiven Ablage der Verstärkungsfaserbänder 12 auf einer Unterlage 18 ist der Ablegekopf 14 mittels eines nicht dargestellten Handhabungsgeräts, insbesondere eines Standard-Industrieroboters mit einer Vielzahl von Freiheitsgraden, in Relation zu der Unterlage 18 positionierbar. Als Verstärkungsfaserbänder 12 kommen bevorzugt schmale Kohlenstofffaserbänder zum Einsatz. Die Unterlage 18 kann eine von der hier lediglich exemplarisch gezeigten ebenen Form abweichende, beispielsweise eine zweidimensional gekrümmte bzw. eine zumindest bereichsweise konvex oder konkav gekrümmte Oberflächengeometrie aufweisen. Eine z-Achse eines Koordinatensystems 20 verläuft parallel zur Hochachse 16 des Ablegekopfes 14. Der Ablegekopf 14 bewegt sich hier parallel zur x-Achse des Koordinatensystems 20 in einer Ablegerichtung 22 über die Unterlage 18 bzw. die darauf bereits abgelegten Verstärkungsfaserbänder 12 hinweg.

An dem Ablegekopf 14 ist ein erfindungsgemäßes Ortungssystem 30 angeordnet. Mittels des Ortungssystems 30 werden eine erste und eine zweite Laserlinie 32, 34 auf die Unterlage 18 bzw. die darauf abgelegten Verstärkungsfaserbänder 12 projiziert. Die Laserlinien 32, 34 verlaufen bei der hier gezeigten geradlinigen Ablegekurve parallel zueinander beabstandet sowie quer zur Ablegerichtung 22 bzw. der x-Achse des Koordinatensystems 20. Das Ortungssystem 30 ist mechanisch mittels einer geeigneten, räumlich positionierbaren Halterung 36 an einer Seite 38 des Ablegekopfes 14 befestigt, die der Ablegerichtung entgegengesetzt orientiert ist.

Die **Fig. 2** illustriert eine prinzipielle Darstellung des Ortungssystems von Fig. 1.

Das Ortungssystem 30 umfasst unter anderem eine Laserquelle 40 zur Erzeugung eines Hauptstrahls 42, der mit Hilfe eines Strahlteilers 44 in einen ersten und einen zweiten Laserstrahl 46, 48 aufgeteilt wird. Die beiden Laserstrahlen 46, 48 sind lateral bzw. quer zur Ablegerichtung trapezförmig aufgefächert (vgl. Fig. 1) und dienen zur Projektion der beiden (geradlinigen) Laserlinien 32, 34 auf der Unterlage 18 bzw. den darauf abgelegten Verstärkungsfaserbändern 12.

Durch die bereichsweise stets unterschiedliche Oberflächengeometrie der abgelegten Verstärkungsfaserbänder 12 ergeben die projizierten Laserlinien 32, 34 ein charakteristisches erstes und ein zweites Höhenprofil 50, 52. Ein Bild 54 dieser hier lediglich exemplarisch gezeigten zwei Höhenprofile 50, 52 ist mittels einer digitalen Kamera 56 aufnehmbar und einer elektronischen Auswerteeinheit 58 zuleitbar. Bei der Auswerteeinheit 58 handelt es sich bevorzugt um eine zur digitalen in Echtzeit Bildauswertung geeignete Recheneinheit, in die gegebenenfalls eine Mess-, Steuer- und Regeleinheit integriert ist. Darüber hinaus kann das Ortungssystem 30 mindestens einen Sensor 60, wie zum Beispiel einen Beschleunigungssensor oder einen Kreiselkompass zur Erfassung von Lageänderungen des Ablegekopfes um seine Hochachse herum, aufweisen.

Zwischen den beiden parallelen Laserstrahlen 46, 48 und einer Oberfläche 62 der Verstärkungsfaserbänder 12 bzw. einer Oberseite 64 der Unterlage 18 besteht ein Winkel von α, während eine optische Achse 66 der Kamera 56 unter einem Winkel β zu der Oberfläche 62 bzw. der Oberseite 64 der Unterlage 18 verläuft. Die beiden Laserlinien 32, 34 bzw. die Höhenprofile 50, 52 verlaufen auf der Oberfläche 62 der Verstärkungsfaserbänder 12 jeweils quer zu der Ablegerichtung 22 und parallel in einem Abstand A voneinander. Die Laserlinien 32, 34 werden bevorzugt kontinuierlich auf die Unterlage 18 bzw. die darauf abgelegten Verstärkungsfaserbänder 12 projiziert.

Der Abstand A lässt sich zum Beispiel aus einem Parallelabstand 72 zwischen den Laserstrahlen 46, 48 berechnen und ist unabhängig von einer vertikalen Höhe 74 zwischen dem Ortungssystems 30 und der Oberfläche 62 der Verstärkungsfaserbänder 12 bzw. einer Relativposition zwischen dem Ortungssystem 30 und der Oberfläche 62.

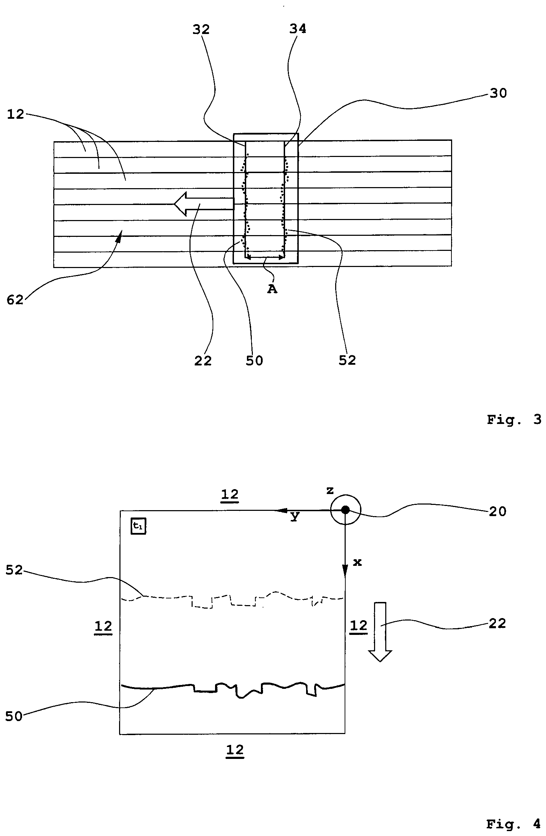

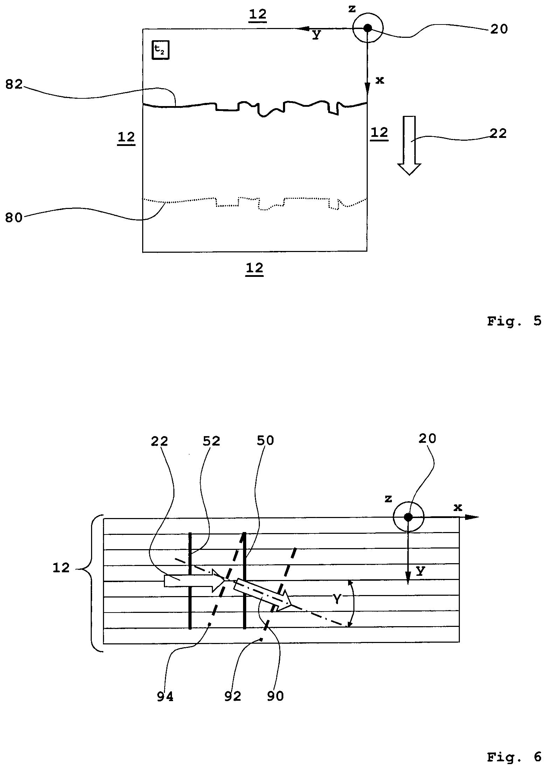

Anhand der **Fig. 3**, die eine Draufsicht auf abgelegte Verstärkungsfaserbänder mit zwei darauf projizierten Laserlinien zum Erzeugen von Höhenprofilen illustriert sowie den **Fig. 4****,****5****,** die jeweils schematisch zwei zu unterschiedlichen Zeitpunkten t_{1,2} mittels der Kamera aufgenommene Höhenprofile zeigen, soll der Ablauf des erfindungsgemäßen Verfahrens näher erläutert werden.

Aus der **Fig. 3** ist erkennbar, dass durch die beiden projizierten Laserlinien 32, 34 wegen der örtlich stets individuell verschiedenen Oberfläche 62 der abgelegten Verstärkungsfaserbänder 12 die zwei Höhenprofile 50, 52 entstehen, die mittels der Kamera des Ortungssystems 30 aufnehmbar sind. Projiziert auf eine im mathematischen Sinne vollkommen ebene Fläche würden die geradlinigen Laserlinien 32, 34 ebenfalls geradlinige Höhenprofile 50, 52 hervorrufen. Zur ordnungsgemäßen Funktion des Ortungssystems 30 sei daher vorausgesetzt, dass die Höhenprofile 50, 52 an jedem Ort der abgelegten Verstärkungsfaserbänder 12 bzw. der Unterlage unterschiedlich sind. Auf einer im mikroskopischen Sinne völlig ebenen bzw. glatten oder spiegelnden Fläche ist ein Einsatz des Ortungssystems 30 hingegen nicht vorgesehen.

Verfahrensgemäß werden die aus den permanent projizierten Laserlinien 32, 34 entstehenden Höhenprofile 50, 52 mittels der Kamera des Ortungssystems mit einer hohen Frequenz bzw. Abtastrate von mindestens 10 Hz erfasst und in dessen Auswerteeinheit automatisch analysiert (vgl. Fig. 1,2). Die **Fig. 4** zeigt schematisch das vorauseilende erste Höhenprofil 50 und das diesem nacheilende zweite Höhenprofil 52, die beispielsweise zum Zeitpunkt t₁ mittels der Kamera aufgenommen wurden. Demgegenüber zeigt die **Fig. 5** ein vorauseilendes erstes Höhenprofil 80 und ein diesem nacheilendes zweites Höhenprofil 82, die beide zum Zeitpunkt t₂ aufgenommen wurden. Hierbei bewegt sich der Ablegekopf zusammen mit dem daran befestigten Ortungssystem in der Ablegerichtung 22 bzw. in Richtung der x-Achse des Koordinatensystems 20 über die Verstärkungsfaserbänder 12 hinweg. Die Zeitdifferenz t₂ minus t₁ bzw. ein Zeitintervall Δt = t₂-t₁ ist so bemessen, dass die Höhenprofile 50, 52, 80, 82 mittels der Kamera mit einer geeigneten Abtastrate bzw. Frequenz von mindestens 10 Hz kontinuierlich aufgenommen und ausgewertet werden können. Das Projizieren der Laserlinien, die Aufnahme der sich aus diesen ergebenden Höhenprofile 50, 52, 80, 82 und deren Vergleich auf Kongruenz wird dabei verfahrensgemäß kontinuierlich wiederholt, wobei eine Bildaufnahmefrequenz bzw. eine Bildabtastrate von mindestens 10 Hz angestrebt wird.

Das Wiederholen der Verfahrensschritte kann unter Umständen erst nach dem Ablauf einer Verzögerungszeit erfolgen, um insbesondere Verzögerungen bis zur Herstellung erneuter Aufnahmebereitschaft der Kamera zu kompensieren.

Innerhalb der Auswerteeinheit des Ortungssystems erfolgt nach dem Projizieren der Laserlinien und der Aufnahme der Höhenprofile 50, 52, 80, 82 in einem weiteren Verfahrensschritt die eigentliche Auswertung durch einen Vergleich der jeweils zwei zu den unterschiedlichen Zeitpunkten t_{1,2} aufgenommen Höhenprofile 50, 52 sowie 80, 82 auf Deckungsgleichheit. Ergibt dieser Vergleich, dass zu den Zeitpunkten t_{1,2} zwei identische Höhenprofile vorliegen - wie es in Fig. 4, 5 exemplarisch bei den Höhenprofilen 50 und 82 der Fall ist - gibt die Auswerteeinheit ein geeignetes internes Signal bzw. einen Marker aus. Das Vorhandensein dieses Signals zeigt an, dass der Ablegekopf in dem Zeitintervall t₂ minus t₁ bzw. dem Messintervall Δt um den Abstand A zwischen den projizierten Laserlinien bzw. den jeweils zwei parallelen Höhenprofilen 50, 52 und 80, 82 in der Ablegerichtung, d.h. parallel zur x-Achse des Koordinatensystems, verfahren wurde. Aus der Zeitdifferenz t₂-t₁ und dem Abstand A lässt sich unter anderem die aktuelle Verfahrgeschwindigkeit v des Ablegekopfes mittels der Auswerteeinheit errechnen. Aus einer Anzahl n der von der Auswerteeinheit abgegebenen Signale lässt sich bezogen auf einen Nullpunkt hier beispielhaft ein absoluter Verfahrweg x entlang der x-Achse des Koordinatensystems 20 gemäß der Beziehung x = n * A mit Hilfe der Auswerteeinheit berechnen.

Aus einem kreuzweisen Vergleich der Höhenprofile 50, 52, 80, 82 ist zudem innerhalb der Auswerteeinheit die Bewegungsrichtung des Ablegekopfes bestimmbar, d.h. ob die Bewegung des Ablegekopfes in oder entgegen der x-Achse des Koordinatensystems 20 erfolgt. Sind zum Beispiel - wie hier die Höhenprofile 50, 82 deckungsgleich - hat sich der Ablegekopf zusammen mit dem Ortungssystem in der Ablegerichtung 22 weiterbewegt. Wenn hingegen umgekehrt das Höhenprofil 80 und das Höhenprofil 52 kongruent sind, ist eine Bewegung entgegen der Ablegerichtung 22 bzw. der x-Achse des Koordinatensystems 20 erfolgt.

Bei einem Verfahren zur Detektion von Ablegefehlern mittels des Ortungssystems wird durch die zeitgleiche Projektion einer Vielzahl von Laserlinien eine Vielzahl von Höhenprofilen erzeugt, die mittels der Kamera in einem einzigen Bild aufgenommen werden können. Aus den Höhenprofilen lässt sich dann mittels der Auswerteeinheit zumindest ein von der Kamera erfassbarer Bereich der Oberfläche der abgelegten Verstärkungsfaserbänder als ein digitales 3D-Modell innerhalb der Auswerteeinheit nachbilden. Hierdurch lassen sich mittels geeigneter Bildanalysealgorithmen unterschiedliche Typen von Ablegefehlern, wie zum Beispiel die Verdrehung von Verstärkungsfaserbändern um ihre Längsachse, Lücken zwischen benachbarten Verstärkungsfaserbändern oder Überlappungen von Verstärkungsfaserbändern eindeutig detektieren.

Die **Fig. 6** zeigt eine Draufsicht auf abgelegte Verstärkungsfaserbänder mit zwei Paaren paralleler Höhenprofile bei einem von einem geradlinigen Verlauf abweichenden Verfahrweg des Ablegekopfes.

Zunächst bewegt sich der Ablegekopf mit dem Ortungssystem in der Ablegerichtung 22 und es werden die Höhenprofile 50, 52 erfasst. Anschließend wird der Ablegekopf um seine Hochachse bzw. die z-Achse des Koordinatensystems 20 einen Winkel γ von hier exemplarisch etwa 22,5° verschwenkt, wodurch zwei ebenfalls parallel beabstandet verlaufende, ebenfalls um den Winkel γ verschwenkte Höhenprofile 90, 92 von der Kamera des Ortungssystems aufgenommen und zur weiteren Analyse der Auswerteeinheit zugeführt werden.

Zur Erfassung von Verschwenkbewegungen des Ablegekopfes um seine Hochachse kann zum Beispiel der eingangs erwähnte Sensor dienen (vgl. Fig. 2), der beispielsweise mit einem Beschleunigungssensor, mit einem Kreiselkompass oder ggfls. auch mit einem elektronischen Magnetkompass realisiert sein kann. Anhand des von dem Sensor ermittelten Winkels γ können die von der Kamera aufgenommenen Höhenprofile 90, 92 durch digitale Bildverarbeitungsalgorithmen innerhalb der Auswerteeinheit neu zusammengesetzt und anschließend zur Feststellung von Kongruenzen zwischen den solchermaßen aufbereiteten Höhenprofilen 50, 52, 90, 92 wiederum miteinander verglichen werden.

Das erfindungsgemäße Ortungssystem erlaubt damit eine präzise Lagebestimmung des Ablegekopfes in Bezug zur Unterlage bzw. den darauf abgelegten Verstärkungsfaserbändern unabhängig vom Wegmesssystem des Handhabungsgeräts bzw. des zur Positionierung des Ablegekopfes eingesetzten Standard-Industrieroboters.

**Bezugszeichenliste**

| | | | |
|---|---|---|---|
| 10. | Vorrichtung | 80. | erstes Höhenprofil |
| 12. | Verstärkungsfaserband | 82. | zweites Höhenprofil |
| 14. | Ablegekopf | | |
| 16. | Hochachse | | |
| 18. | Unterlage | | |
| 20. | Koordinatensystem | 90. | Ablegerichtung |
| 22. | Ablegerichtung | 92. | (erstes) Höhenprofil |
| | | 94. | (zweites) Höhenprofil |
| | | | |
| 30. | Ortungssystem | | |
| 32. | erste Laserlinie | | |
| 34. | zweite Laserlinie | | |
| 36. | Halterung | | |
| 38. | Seite (Ablegekopf) | A | Abstand (Laserlinien) |
| 40. | Laserquelle | α | Winkel (Laserstrahlen) |
| 42. | Hauptstrahl | β | Winkel (optische Achse) |
| 44. | Strahlteiler | γ | Winkel (Verschwenkung) |
| 46. | erster Laserstrahl | | |
| 48. | zweiter Laserstrahl | | |
| 50. | (erstes) Höhenprofil | | |
| 52. | (zweites) Höhenprofil | | |
| 54. | Bild (Kamera) | | |
| 56. | Kamera | | |
| 58. | Auswerteeinheit | | |
| 60. | Sensor | | |
| 62. | Oberfläche | | |
| 64. | Oberseite (Unterlage) | | |
| 66. | optische Achse (Kamera) | | |
| 68. | Halterung | | |
| 70. | Seite (Ablegekopf) | | |
| 72. | Parallelabstand (Laserstrahlen) | | |
| 74. | vertikale Höhe | | |

## Patentansprüche

1. Ortungssystem (30) zur Erfassung einer räumlichen Position eines Ablegekopfes (14) einer Vorrichtung zum automatischen Ablegen von Verstärkungsfaserbändern (12) in Relation zu einer Unterlage (18), auf der die Verstärkungsfaserbänder (12) mittels des Ablegekopfes (14) in einer Ablegerichtung (22) ablegbar sind, wobei das Ortungssystem (30) umfasst:
mindestens eine Laserquelle (40), welche einen Hauptstrahl (42) ausstrahlt und dazu ausgebildet ist, wenigstens zwei im Wesentlichen in einem Abstand A parallel voneinander und im Wesentlichen quer zu der Ablegerichtung verlaufende Laserlinien auf die abgelegten Verstärkungsfaserbänder zu projizieren,
eine Kamera (56), und
eine mit der Kamera (56) gekoppelte Auswerteeinheit (58),
wobei das Ortungssystem dazu ausgebildet ist, aufgrund einer unregelmäßigen Oberfläche (62) der abgelegten Verstärkungsfaserbänder (12) entstehende Höhenprofile (50, 52, 80, 82, 92, 94) der projizierten Laserlinien (32, 34) mittels der Kamera (56) aufzunehmen und der Auswerteeinheit (58) zuzuführen, und die Höhenprofile (50, 52, 80, 82, 92, 94) jeweils zu unterschiedlichen Zeitpunkten t₁ und t₂ mit t₁ > t₂ während einer Bewegung des Ablagekopfes (14) in der Ablegerichtung (22) aufzunehmen, **dadurch gekennzeichnet, dass**
die Auswerteeinheit (58) dazu ausgebildet ist, die zu dem Zeitpunkt t₁ aufgenommenen Höhenprofile (50, 52) mit den zu dem Zeitpunkt t2 aufgenommenen Höhenprofilen (80, 82, 92, 9) kreuzweise miteinander zu vergleichen, und
ein Signal auszugeben, wenn eines der zum Zeitpunkt t₁ aufgenommenen Höhenprofile (50, 52) kongruent ist zu einem der zum Zeitpunkt t₂ aufgenommenen Höhenprofile (80, 82, 92, 94), wobei das Vorhandensein eines Signals anzeigt, dass der Ablegekopf (14) in einem Zeitintervall Δ t = t₂ minus t₁ um den Abstand A, der zwischen den projizierten Laserlinien (32, 34) besteht, in der Ablegerichtung (22) in Relation zu der Unterlage (18), auf der die Verstärkungsfaserbänder (12) mittels des Ablegekopfes (14) abgelegt wurden, verfahren wurde.

2. Ortungssystem (30) nach Anspruch 1, **dadurch gekennzeichnet, dass** das Ortungssystem (3) einen Strahlteiler (44) umfasst, der ausgebildet ist, den von der Laserquelle (40) ausgestrahlten Hauptstrahl (42) in mindestens zwei separate Laserstrahlen (46, 48) aufzuteilen.

3. Ortungssystem (30) nach Anspruch 1 oder 2, **dadurch gekennzeichnet, dass** die Laserstrahlen (46, 48) zum Erzeugen der Laserlinien (32, 34) lateral trapezförmig aufgefächert sind.

4. Ortungssystem (30) nach einem der Ansprüche 1 bis 3, **dadurch gekennzeichnet, dass** das Ortungssystem (30) mindestens einen Sensor (60) zur Erfassung einer Rotationsbewegung des Ablegekopfes (14) um dessen Hochachse (16) aufweist.

5. Ortungssystem (30) nach einem der Ansprüche 1 bis 4, **dadurch gekennzeichnet, dass** mittels des Ortungssystems (30) zumindest im Wesentlichen geradlinige Verfahrbewegungen des Ablegekopfes (14) in Relation zu der Unterlage (18) erfassbar sind.

6. Ortungssystem (30) nach einem der Ansprüche 1 bis 5, **dadurch gekennzeichnet, dass** das Ortungssystem (30) auf einer Seite (38) des Ablegekopfes (14), die der Ablegerichtung (22) entgegengesetzt orientiert ist, angeordnet ist.

7. Verfahren zur Erfassung einer räumlichen Position eines Ablegekopfes (14) einer Vorrichtung (10) zum automatischen Ablegen von Verstärkungsfaserbändern (12) in Relation zu einer Unterlage (18), auf der die Verstärkungsfaserbänder (12) mittels des Ablegekopfes (14) in einer Ablegerichtung (22) abgelegt werden, umfassend folgende Schritte:
a) Projizieren von mindestens zwei in einem Abstand A voneinander parallel und im Wesentlichen quer zu der Ablegerichtung (22) verlaufenden Laserlinien (32, 34) mittels mindestens einer Laserquelle (40) auf die abgelegten Verstärkungsfaserbänder (12),
b) jeweils zu unterschiedlichen Zeitpunkten t₁ und t₂ mit t₂ > t₁ während einer Bewegung des Ablagekopfes (14) in der Ablegerichtung (22) Aufnehmen, mittels einer Kamera (56), von aufgrund der unregelmäßigen Oberfläche (62) der abgelegten Verstärkungsfaserbänder (12) entstehenden Höhenprofilen (50, 52, 80, 82, 92, 94), die jeweils den mindestens zwei projizierten Laserlinien (32, 34) zuordenbar sind,
**gekennzeichnet durch** die Schritte:
c) kreuzweise miteinander Vergleichen, mittels einer Auswerteeinheit (58), der zu dem Zeitpunkt t₁ aufgenommenen Höhenprofile (50, 52) mit den zu dem Zeitpunkt t2 aufgenommenen Höhenprofilen (80, 82, 92, 9),
d) Ausgabe eines Signals, wenn eines der zum Zeitpunkt t₁ aufgenommenen Höhenprofile (50, 52) kongruent ist zu einem der zum Zeitpunkt t₂ aufgenommenen Höhenprofile (80, 82, 92, 94), wobei das Vorhandensein eines Signals anzeigt, dass der Ablegekopf (14) in einem Zeitintervall Δ t = t₂ minus t₁ um den Abstand A, der zwischen den projizierten Laserlinien (32, 34) besteht, in der Ablegerichtung (22) in Relation zu der Unterlage (18), auf der die Verstärkungsfaserbänder (12) mittels des Ablegekopfes (14) abgelegt werden, verfahren wurde, und
e) Wiederholen der Schritte a) bis d).

8. Verfahren nach Anspruch 7, **dadurch gekennzeichnet, dass** das Aufnehmen und das Vergleichen der Höhenprofile (50, 52, 80, 82, 92, 94) mit einer Abtastrate von mindestens 10 Hz erfolgen .

## Claims

1. Locating system (30) for detecting a spatial position of a laying head (14) of a device for automatically laying reinforcing fibre strips (12) in relation to a base (18) on which the reinforcing fibre strips (12) can be laid in a laying direction (22) by means of the laying head (14), wherein the locating system (30) comprises:
at least one laser source (40), which emits a main beam (42) and is designed to project onto the laid reinforcing fibre strips at least two laser lines which extend substantially in parallel at a spacing A from one another and substantially transversely to the laying direction,
a camera (56), and
an evaluation unit (58) coupled to the camera (56),
wherein the locating system is designed
to record by means of the camera (56) elevation profiles (50, 52, 80, 82, 92, 94) of the projected laser lines (32, 34) produced as a result of an irregular surface (62) of the laid reinforcing fibre strips (12) and to supply them to the evaluation unit (58), and to record the elevation profiles (50, 52, 80, 82, 92, 94) respectively at different times t₁ and t₂, where t₁ > t₂, during a movement of the laying head (14) in the laying direction (22),
**characterized in that**
the evaluation unit (58) is designed
to compare the elevation profiles (50, 52) recorded at the time t₁ with the elevation profiles (80, 82, 92, 9) recorded at the time t₂ crosswise with one another, and
to output a signal
if one of the elevation profiles (50, 52) recorded at the time t₁ is congruent with one of the elevation profiles (80, 82, 92, 94) recorded at the time t₂,
wherein the presence of a signal indicates that the laying head (14) was displaced in a time interval Δ t = t₂ minus t₁ by the spacing A, which exists between the projected laser lines (32, 34), in the laying direction (22) in relation to the base (18) on which the reinforcing fibre strips (12) were laid by means of the laying head (14).

2. Locating system (30) according to Claim 1,
**characterized in that** the locating system (3) comprises a beam splitter (44), which is designed to split the main beam (42) emitted by the laser source (40) into at least two separate laser beams (46, 48).

3. Locating system (30) according to Claim 1 or 2,
**characterized in that**, for producing the laser lines (32, 34), the laser beams (46, 48) are fanned out laterally in a trapezoidal manner.

4. Locating system (30) according to one of Claims 1 to 3, **characterized in that** the locating system (30) has at least one sensor (60) for detecting a rotational movement of the laying head (14) about its vertical axis (16).

5. Locating system (30) according to one of Claims 1 to 4,
**characterized in that** at least substantially straight displacement movements of the laying head (14) in relation to the base (18) can be detected by means of the locating system (30).

6. Locating system (30) according to one of Claims 1 to 5,
**characterized in that** the locating system (30) is arranged on a side (38) of the laying head (14) that is oriented counter to the laying direction (22).

7. Method for detecting a spatial position of a laying head (14) of a device (10) for automatically laying reinforcing fibre strips (12) in relation to a base (18) on which the reinforcing fibre strips (12) are laid in a laying direction (22) by means of the laying head (14), comprising the following steps:
a) projecting onto the laid reinforcing fibre strips (12), by means of at least one laser source (40), at least two laser lines (32, 34) which extend in parallel at a spacing A from one another and substantially transversely to the laying direction (22),
b) recording, by means of a camera (56), respectively at different times t₁ and t₂, where t₂ > t₁, during a movement of the laying head (14) in the laying direction (22), elevation profiles (50, 52, 80, 82, 92, 94), which can be assigned in each case to the at least two projected laser lines (32, 34) and are produced as a result of the irregular surface (62) of the laid reinforcing fibre strips (12);
**characterized by** the steps of:
c) comparing crosswise with one another, by means of an evaluation unit (58), the elevation profiles (50, 52) recorded at the time t₁ with the elevation profiles (80, 82, 92, 9) recorded at the time t₂;
d) outputting a signal when one of the elevation profiles (50, 52) recorded at the time t₁ is congruent with one of the elevation profiles (80, 82, 92, 94) recorded at the time t₂, wherein the presence of a signal indicates that the laying head (14) was displaced in a time interval Δ t = t₂ minus t₁ by the spacing A, which exists between the projected laser lines (32, 34), in the laying direction (22) in relation to the base (18) on which the reinforcing fibre strips (12) are laid by means of the laying head (14), and
e) repeating steps a) to d).

8. Method according to Claim 7, **characterized in that** the recording and the comparing of the elevation profiles (50, 52, 80, 82, 92, 94) are performed at a sampling rate of at least 10 Hz.

## Revendications

1. Système de localisation (30) destiné à détecter une position spatiale d'une tête de pose (14) d'un dispositif de pose automatique de bandes de fibres de renforcement (12) par rapport à un substrat (18) sur lequel les bandes de fibres de renforcement (12) peuvent être posées dans une direction de pose (22) au moyen de la tête de pose (14), le système de localisation (30) comprenant :
au moins une source de laser (40) qui émet un faisceau principal (42) et qui est conçue pour projeter sur les bandes de fibres de renforcement posées au moins deux lignes de laser qui s'étendent sensiblement à une distance A parallèlement l'une à l'autre et sensiblement transversalement à la direction de pose,
une caméra (56), et
une unité d'évaluation (58) couplée à la caméra (56),
le système de localisation étant conçu pour enregistrer au moyen de la caméra (56) des profils en hauteur (50, 52, 80, 82, 92, 94) des lignes de laser projetées (32, 34) qui sont générés en raison d'une surface irrégulière (62) des bandes de fibres de renforcement posées (12) et pour les amener à l'unité d'évaluation (58) et pour enregistrer les profils en hauteur (50, 52, 80, 82, 92, 94) à des instants différents t₁ et t₂, avec t₁ > t₂, pendant le déplacement de la tête de pose (14) dans la direction de pose (22),
**caractérisé en ce que** l'unité d'évaluation (58) est conçue pour comparer les profils en hauteur (50, 52), enregistrés à l'instant t₁, avec les profils en hauteur (80, 82, 92, 9) enregistrés à l'instant t₂ l'un avec l'autre et pour émettre un signal lorsque l'un des profils en hauteur (50, 52), enregistrés à l'instant t₁, est congruent avec l'un des profils en hauteur (80, 82, 92, 94) enregistrés à l'instant t₂,
la présence d'un signal indiquant que la tête de pose (14) a été déplacée, dans un intervalle de temps Δt = t₂ moins t₁, de la distance A, entre les lignes de laser projetées (32, 34), dans la direction de pose (22) par rapport au substrat (18) sur lequel les bandes de fibres de renforcement (12) ont été posées au moyen de la tête de pose (14).

2. Système de localisation (30) selon la revendication 1, **caractérisé en ce que** le système de localisation (3) comprend un diviseur de faisceau (44) qui est conçu pour diviser le faisceau principal (42), émis par la source de laser (40), en au moins deux faisceaux laser séparés (46, 48).

3. Système de localisation (30) selon la revendication 1 ou 2, **caractérisé en ce que** les faisceaux laser (46, 48) sont étalés latéralement en éventail trapézoïdal pour générer les lignes de laser (32, 34).

4. Système de localisation (30) selon l'une des revendications 1 à 3, **caractérisé en ce que** le système de localisation (30) comporte au moins un capteur (60) destiné à détecter un mouvement de rotation de la tête de pose (14) sur son axe vertical (16).

5. Système de localisation (30) selon l'une des revendications 1 à 4, **caractérisé en ce que** des mouvements de déplacement au moins sensiblement rectilignes de la tête de pose (14) par rapport au substrat (18) peuvent être détectés au moyen du système de localisation (30).

6. Système de localisation (30) selon l'une des revendications 1 à 5, **caractérisé en ce que** le système de localisation (30) est disposé sur un côté (38) de la tête de pose (14) qui est orienté à l'opposé de la direction de pose (22).

7. Procédé de détection de la position spatiale d'une tête de pose (14) d'un dispositif (10) destiné à poser automatiquement des bandes de fibres de renforcement (12) par rapport à un substrat (18) sur lequel les bandes de fibres de renforcement (12) sont posées au moyen de la tête de pose (14) dans une direction de pose (22), le procédé comprenant les étapes suivantes :
a) projeter au moins deux lignes de laser (32, 34), qui s'étendent à une distance A parallèlement l'une à l'autre et sensiblement transversalement à la direction de pose (22), au moyen d'au moins une source de laser (40) sur les bandes de fibres de renforcement (12) posées,
b) enregistrer à des instants différents t₁ et t₂, avec t₂ > t₁, pendant le déplacement de la tête (14) dans la direction de pose (22), au moyen d'une caméra (56), des profils en hauteur (50, 52, 80, 82, 92, 94) qui sont générés en raison de la surface irrégulière (62) des bandes de fibres de renforcement (12) posées et qui peuvent être associés respectivement aux au moins deux lignes de laser projetées (32, 34), **caractérisé par** les étapes suivantes :
c) effectuer une comparaison croisée, au moyen d'une unité d'évaluation (58), entre les profils en hauteur (50, 52) enregistrés à l'instant t₁ et les profils en hauteur (80, 82, 92, 9) enregistrés à l'instant t₂,
d) émettre un signal lorsque l'un des profils en hauteur (50, 52) enregistrés à l'instant t₁ est congruent à l'un des profils en hauteur (80, 82, 92, 94) enregistrés à l'instant t₂, la présence d'un signal indiquant que la tête de pose (14) a été déplacée, dans un intervalle de temps Δt = t₂ moins t₁, de la distance A, entre les lignes de laser projetées (32, 34), dans la direction de pose (22) par rapport au substrat (18) sur lequel les bandes de fibres de renforcement (12) ont été posées au moyen de la tête de pose (14), et
e) répéter les étapes a) à d).

8. Procédé selon la revendication 7, **caractérisé en ce que** l'enregistrement et la comparaison des profils en hauteur (50, 52, 80, 82, 92, 94) sont effectués à une fréquence de balayage d'au moins 10 Hz.
